# EUROPEAN PATENT SPECIFICATION

(11) **EP 3 441 847 B1**
(45) Date of publication and mention of the grant of the patent: **19.01.2022**
(21) Application number: 17185361.7
(22) Date of filing: 08.08.2017
(51) Int. Cl.: G06F 3/01, G02B 27/01

(54) **CONTROLLER FOR USE IN A DISPLAY DEVICE**
STEUERGERÄT ZUR VERWENDUNG IN EINER ANZEIGEVORRICHTUNG
DISPOSITIF DE COMMANDE DESTINÉ À ÊTRE UTILISÉ DANS UN DISPOSITIF D'AFFICHAGE

(43) Date of publication of application: 13.02.2019
(73) Proprietor: Vestel Elektronik Sanayi ve Ticaret A.S., 45030 Manisa (TR)
(72) Inventor: Kirisken, Barbaros, 45030 Manisa (TR)
(74) Representative: Hermann, Felix

(56) References cited:
- WO-A1-2013/112554
- JP-A- 2001 197 400
- US-A1- 2016 314 624
- US-A1- 2017 113 641

## Description

### TECHNICAL FIELD

The present invention relates to a controller for use in a display device, the controller being configured to cause the display device to switch between a first augmented reality operation mode and a second augmented reality operation mode. The invention further relates to a display device operable in a first augmented reality operation mode and a second augmented reality operation mode.

### TECHNICAL BACKGROUND

In a virtual reality (VR) system, a user's physical presence is simulated in a complete virtual or imaginary environment, which means that the real environment is replaced by the virtual environment. In an augmented reality (AR) system, a real-world environment is augmented or supplemented by computer-generated sensory input, for example sound, video or graphics, such that a view of the reality is modified by a computer. As a result, augmented reality enhances a user's current perception of the reality. This disclosure uses this understanding of VR and AR systems.

A first type of augmented reality is an optical see-through mode, where the real world is seen through mirrors placed in front of the user's eyes. The mirrors can be at least partly transparent and may also be used to reflect the computer-generated images into the user's eyes, thereby optically combining the real- and virtual-world views.

Another type of augmented reality is a video see-through mode, where the real-world view is captured with a camera mounted on the display device and computer-generated images are electronically combined with the video representation of the real world in real time.

A hybrid head mounted display (HMD) is a display device, worn on the head or as part of a helmet, with a display arranged in front of a user's eye, which is capable of performing the virtual reality operation mode as well as the first and the second augmented reality operation modes.

From US 2016/0314624 A1 a display device system providing augmented reality and virtual reality displays in the same device is known. The display system comprises an electronic display, a processor which is configured to display a virtual reality scene and an augmented reality scene to the user in the same electronic display and to coordinate a switching operation between the virtual reality scene and the augmented reality scene. The switching between the virtual reality scene and the augmented reality scene is for example triggered in response to an activation of a triggering mechanism by the user or in response to detected user inputs, such as a user's hand movement, an operation of a hand-held controller, an operation of a wearable controller, or a voice command. This means that the switching operation always depends on user related information.

However, environmental conditions, such as for example the brightness of the field of view of a user, may impact quality of the images displayed to the user. Further, augmented reality operation modes, for example the video see-through mode and the optical see-through mode, can comprise different characteristics and a different suitability for different environments. Therefore, there is a need to provide an augmented reality display device being operable in different augmented reality operation modes.

US 2017/0113641 A1 discloses a moveable internal shock-absorbing energy dissipation padding in an autonomous vehicle. JP 2001197400 relates to a display device. WO 2013/112554 A1 discloses google imaging systems and methods.

### SUMMARY

It is an object to overcome the above-mentioned disadvantages of the state of the art. One object of this disclosure is to provide a controller configured to cause a display device to automatically switch between a first augmented reality operation mode and a second augmented reality operation mode. The switching may be easy to implement and reliable. Further, a display device may be suitable for an application in different environmental conditions and operable in a first and a second augmented reality operation mode. The switching between the first and the second augmented reality operation modes may be performed automatically without the need of user related information or inputs. It is another object to provide a method of switching between a first augmented reality operation mode and a second augmented reality operation mode in a display device.

At least one of the objects is solved by the subject matter of independent claim 1.

Advantageous embodiments are subject to the dependent claims and will be set out herein below.

An aspect of this disclosure relates to enabling a reliable and easy to implement switching process between a first augmented reality operation mode and a second augmented reality operation mode in a display device, for example smart glasses. Advantageously, the switching process may be performed automatically without the need of any user related information or user input. Therefore, a sensing unit may capture an environment including at least a part of a field of view of a user, thereby defining a sensing unit range. The environment comprises the real surrounding of the user. For example, a landscape or items, such as cars or buildings, may be captured. Further, virtual objects or virtual information added into the field of view of user input. Therefore, a sensing unit may capture an environment including at least a part of a field of view of a user, thereby defining a sensing unit range. The environment comprises the real surrounding of the user. For example, a landscape or items, such as cars or buildings, may be captured. Further, virtual objects or virtual information added into the field of view of the user may be sensed. For example, when the user uses the display device in a street of a city, virtual information may comprise street names or house numbers or a direction to a predefined destination which the user wants to reach. Based on environment related data or a parameter, such as for example the level of brightness or the level of illuminance, the sensing unit initiates the switching process.

The first augmented reality operation mode may be for example an optical see-through mode. This means that a user can see an environment including at least a part of a field of view by looking through an at least partly transparent display of the display device. In this regard, the display functions as a conventional lens of glasses. Additionally, the display also reflects virtual images into the user's eyes, thereby optically combining the real environment and the virtual images.

The second augmented reality operation mode may be for example a video see-through mode. The environment including at least a part of the field of view of the user is captured with a camera mounted on the display device and displayed on the display. Therefore, in this mode the display functions like a screen or monitor displaying at least some portion of the user's field of view. Further, virtual images are electronically combined with the video representation of the field of view of the user.

However, further operation modes, such as a virtual reality operation mode, may be foreseen and implemented into the display device. This means, that the switching between one of the first and the second augmented reality operation modes and the virtual reality operation mode is also based on captured environment related data.

An example embodiment of the invention provides a controller for use in a display device. The controller may be configured to cause the display device to switch between a first augmented reality operation mode and a second augmented reality operation mode. The controller can comprise a sensor that receives an input signal indicative of at least one parameter of an environment captured by a display device sensor including a field of view of a user. The display device may also comprise a processor that compares each of the at least one parameters with a corresponding predefined threshold value. The threshold value may be chosen according to user's experiences or measurements. Further, the processor may also cause the display device to switch between the first and second augmented reality operation modes based on the result of the comparison.

The sensor may be configured such that it senses brightness in the environment. It is possible to adjust the field of view in which the sensor senses the brightness in order to, for example, focus on a desired detail or sector which the user intends to enhance or supplement with virtual objects. The adjustment may be achieved by an input means of the display device. For example, a scrolling wheel may be provided at the display device, wherein a rotation of the wheel adjusts the size of the captured field of view. In case of a HMD the scrolling wheel may be attached to a lateral temple of the HMD. The at least one parameter may be a brightness or luminance value of the captured environment. According to an embodiment of the invention, the brightness value parameter triggering a switching operation of the display device may be defined as a highest, a lowest, or an average measured brightness value and the threshold value is set in accordance with the respective brightness value parameter. For example, the field of view can be divided in at least two field of view parts and for each field of view part, a brightness value can be measured. Based on the different field of view part brightness values, an average brightness value can be calculated. The at least two field of view parts may comprise a different prioritization such that for example a center field of view part may have a higher prioritization than an outer field of view part. The at least two field of view parts may further be adapted with regard to the virtual objects. For example, it is possible to define a field of view part as the direct surrounding, i.e. the environment being in close proximity, of a virtual object. In terms of the switching process, the field of view parts directly surrounding the virtual object are to be prioritized. Prioritized field of view parts may have a higher weighting when calculating the average value.

The sensor may be for example realized by means a camera. The at least one parameter may be indicative of one or more parameters selected from a predefined parameter group. Example parameters are a brightness value of the captured environment, a number of virtual objects displayed by the display device, a complexity of virtual objects displayed by the display device, a size of virtual objects displayed by the display device, a resolution of virtual objects displayed by the display device, or a distance between a first virtual object and a second virtual object. The characteristics of the added virtual objects can differ between each other and can have different impacts on the quality of the generated image perceived by the user. The complexity of a virtual object can for example be dependent on a geometric form or a color gradient. Apparently, a single virtual line is less complex than a virtual image of for example a car. The resolution of a virtual object may be defined as a level of detail of the object. Several ways of measuring an image resolution are known and may be used. For example, pixel resolution is the capability of a sensor to observe or measure the smallest object clearly with distinct boundaries. When the at least one parameter refers to the distance between at least two virtual objects, a highest, a lowest, or an average measured distance value may be used. The average measured distance value is determined by summing up every measured distance between a first and a second virtual object and dividing the sum by the number of measured distances. A distance may be defined as a horizontal or vertical direction, i.e. a direction perpendicular with regard to a viewing direction of the user.

According to one exemplary embodiment, the controller causes the display device to switch between the first and the second augmented reality operation modes, or between one of the first and second augmented reality operation modes and a third virtual reality operation mode. In an embodiment, the controller causes the display device to switch from the second augmented reality operation mode to the first augmented reality operation mode. The switching process is caused or initiated if at least one of the following conditions is satisfied. The brightness value indicated in the input signal is higher than the threshold brightness value, the number of virtual objects is higher than a predefined threshold level, the complexity is higher than a predefined threshold complexity value, the size of the virtual objects is smaller than a predefined threshold size value, the resolution of the virtual objects is higher than a predefined threshold resolution value, or the distance between a first virtual object and a second virtual object is higher than a predefined threshold distance value.

In a further embodiment, the controller causes the display device to switch from the first augmented reality operation mode to the second augmented reality operation mode. The switching process is caused or initiated if at least one of the following conditions is satisfied. The brightness value indicated in the input signal is equal to or lower than the threshold brightness value, the number of virtual objects is equal to or lower than the predefined threshold level, the complexity is equal to or lower than the predefined threshold complexity value, the size of the virtual objects is equal to or higher than the predefined threshold size value, the resolution of the virtual objects is equal to or lower than the predefined threshold resolution value, or the distance between the first virtual object and the second virtual object is equal to or lower than the predefined threshold distance value.

As already described above, the first augmented reality operation mode may be an optical see-through mode and the second augmented reality operation mode may be a video see-through mode. Therefore, the controller switches between the first augmented reality operation mode and the second augmented reality operation mode.

In a further example embodiment of the invention, a display device may be operable in a first augmented reality operation mode and a second augmented reality operation mode. The display device comprises a controller which is configured according to one of the different embodiments described herein. The display device may also comprise a camera may that captures the environment including at least a part of the field of view of the user. Further, a display may display the captured environment if the display device is operated in the second augmented reality operation mode. If the display device is operated in the first augmented reality operation mode, the display does not display the captured environment, but can function as a conventional lens being at least partly transparent of conventional glasses. The user can at least partly look through the display to see or perceive the environment. However, in both augmented reality operation modes, as well as in the virtual reality operation mode, the display displays the generated virtual objects. Advantageously, no user related data or even a user input is needed.

According to an example embodiment of the invention, the display device may be a handheld device, a head mounted device or an electronic display device. The display device can for example be a smart phone or a tablet. Alternatively, the display device may be a wearable device that a user may wear on its head, for example a smart glasses.

In an embodiment, the display is at least partially transparent. For example, display may be a transparent or semi-transparent display panel, such as an organic light emitting diode (OLED) or a liquid crystal display (LCD).

A further example embodiment of the display is a transparent or semi-transparent lens. The lens may be dimensioned and shaped similar to the lens of conventional glasses. However, the lens must be able to display the virtual objects.

In a further development, the lens is made from one piece, or comprises two lens parts. Each lens part may be arranged in front of a user's eye.

It is also possible, that the controller unit comprises a programmable data processing circuitry with a memory module on which a program is stored. When executed by some processor unit, the program causes the display device to switch between its operation modes. Advantageously, the switching operation is performed exclusively automatically. This means that no interaction of the user or a user input is needed in order to initiate or cause a switching between the display device operation modes.

### BRIEF DESCRIPTION OF THE DRAWINGS

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- **Fig. 1**: shows a schematic view of two exemplary arrangements of a display device according to the invention, a first augmented reality operation mode on the right and a second augmented reality operation mode on the left;
- **Fig. 2A**: shows a schematic view of the functioning of the display device according to the invention in the second augmented reality operation mode;
- **Fig. 2B**: shows a schematic view of the functioning of the display device according to the invention in the first augmented reality operation mode;
- **Fig. 3**: shows an exemplary method of switching between the first and the second augmented reality operation modes in a display device according to the invention; and
- **Fig. 4**: shows a further exemplary method of switching between the first and the second augmented reality operation modes in a display device according to the invention.

### DETAILED DESCRIPTION

In the following provides a description of different exemplary embodiments of the invention, in which a display device is generally indicated with the reference numeral 102.

A general idea of the invention relates to enabling a reliable and easy to implement switching process between a first augmented reality operation mode and a second augmented reality operation mode in a display device 102 in order to ensure constant high quality images or videos. The display device 102 may be, for example, smart glasses. Advantageously, the switching process is automatic, i.e. does not require any user related information or user input. A sensing unit of the display device 102 may capture an environment including at least a part of a field of view of a user 101, 204, thereby defining a sensing unit range, and initiate the switching process based on environment related data or a parameter, such as a brightness value or level of illuminance.

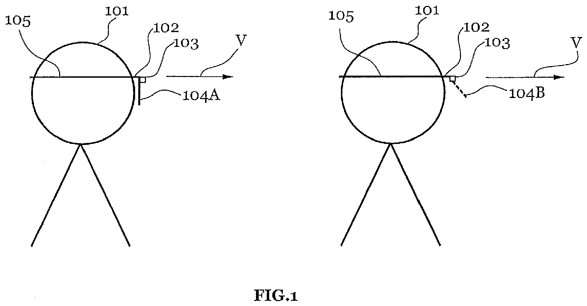

According to Figs. 1 to 5, the functioning of the display device 102 will be explained by means of an example embodiment of the display device 102 as a hybrid HMD or hybrid wearable glasses 102, with an augmented reality overlay that has the capability of displaying projected digital images or reflecting those images into a user's eye as well as allowing the user to see the real environment, thereby combining the real environment including at least a part of the field of view of the user 101, 204 with the generated virtual or computer-generated images. However, the functioning may be adapted analogously to a handheld display device, for example a smart phone or tablet.

The display device 102 is able to generate three-dimensional images. Conclusively, the display 104 is able to display three-dimensional images. A first dimension is defined by a viewing direction V of the user 101, 204, and a second and third dimension are oriented perpendicular with regard to the first dimension, i.e. the viewing direction V. The second dimension may be defined as a horizontal direction and the third dimension may be defined as a vertical direction. Virtual objects generated by the display 104 may be spaced to each other in at least one of the three dimensions.

Fig. 1 shows a schematic view of a first exemplary arrangement of the wearable glasses 102 in a first augmented reality operation mode (right) and a second exemplary arrangement of the wearable glasses 102 in a second augmented reality operation mode (left). The user 101 is indicated by a user's head (top) and part of a body (bottom). The glasses 102 are positioned on the user's head and protrude the head for a certain distance. At a foremost end of the glasses 102 according to a viewing direction V of the user 101, a camera 103 is arranged in a way to capture the environment including, at least in part or in its entirety, the field of view of the user 101. The part which is captured by the camera 103 may be defined as the camera field of view. A center axis of the camera 103 may be substantially aligned with the viewing direction V of the user 101. The center axis of the camera 103 maybe defined as a middle axis of the camera field of view. For example, the camera 103 may be arranged above the user's eyes or next to the user's eyes, i.e. on a right side of a right eye or a left side of a left eye according to the viewing direction V. When being provided on the glasses 102, the camera 103 moves its field of view (center axis) in the same way as the field of view of the user 101 is changing, e.g. when he/she moves his/her head. In both embodiments of Fig. 1, a display 104 extends downwards from at least one temple 105 of the glasses 102 or from a frame (not shown) of the glasses. The reference sign A stands for the second augmented reality operation mode and the reference sign B stands for the first augmented reality operation mode. The longitudinal extension of the display 104 is designed such that it at least partly hides the user's eyes. The display 104 may completely hide the eyes of the user 101 such that essentially the whole field of view of the user 101 is covered by the display 104. An RGB camera delivers the three basic color components (red, green, and blue) of the image. This type of camera is often used for accurate color image acquisitions. An IR camera detects infrared energy (such as heat) and converts it into an electronic signal, which is then processed to produce a thermal image on a display or monitor. The camera(s) may provide a illuminance down to o lx (or o lumen).

As already described above, the first augmented reality operation mode may be an optical see-through mode. This means that a user 101, 204 can see an environment including at least a part of a field of view by looking through an at least partly transparent display 104 of the display device 102. In this regard, the display 104 functions as a conventional lens of a glasses. Additionally, the display 104 also reflects virtual images into the user's 101, 204 eyes, thereby optically combining the real environment and the virtual images.

The second augmented reality operation mode may be a video see-through mode. The environment including at least a part of the field of view of the user 101, 204 is captured with the camera 103, 203 mounted on the glasses 102, and displayed on the display 104. Therefore, in this mode the display 104 functions like a screen or monitor. Further, virtual or computer-generated images are electronically combined with the video representation of the field of view of the user 101, 204. In an example embodiment, the controller switches between the first augmented reality operation mode and the second augmented reality operation mode.

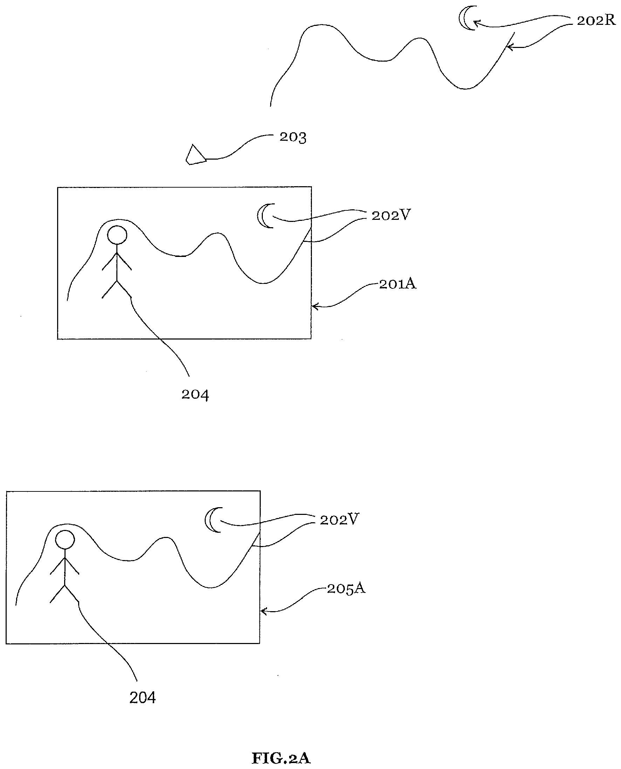

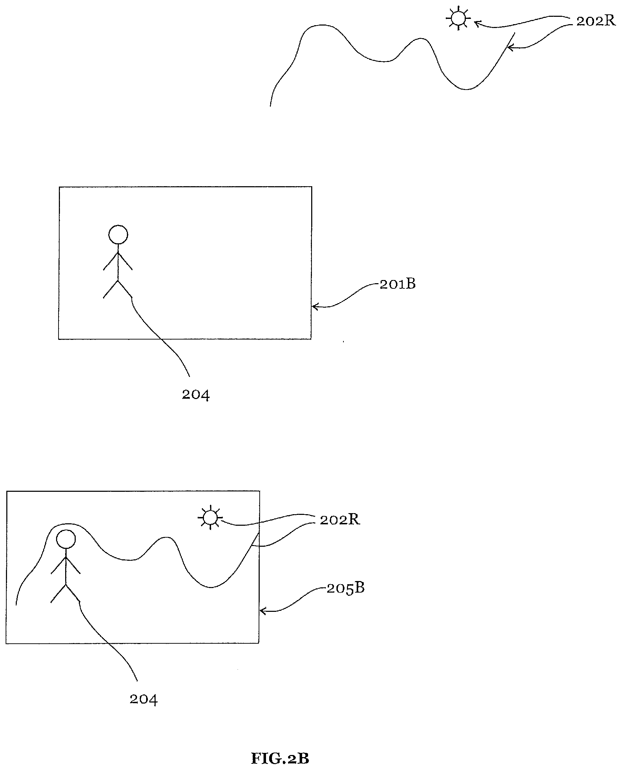

Figs. 2A and 2Bschematically illustrate the functioning of the wearable glasses 102 in the first (Fig. 2B) and the second (Fig. 2A) augmented reality operation modes. Both figures may be divided into three parts. On the top, the real environment including the real field of view of the user 101, 204 is indicated with the reference numeral 202R, the middle section 201A, 201B representing the displayed field of view on the display 104 of the glasses 102, and the bottom section 205A, 205B indicating the perceived field of view of the user 102, 204. Again, the reference sign A refers to the second respectively video see-through operation mode and the reference sign B refers to the first respectively optical see-through operation mode of the glasses 102.

The main difference between both figures and therefore both augmented reality operation modes is that the captured field of view 202R of the user 104, 204 by the camera 203 (Fig. 2A) is transferred to the display 201A in the video see-through mode, the transferred field of view being indicated by the reference sign 202V. As can be seen in Fig. 2B, the real field of view 202R is not transferred to the display 201B in the optical see-through mode because the user 101, 204 can see the real field of view 202R with its own eyes. However, in the first as well as in the second augmented reality operation mode, virtual or computer-generated images may be added into the field of view, thereby supplementing the real environment with virtual objects or images. For example, it is possible to position a virtual representation of the user 204 itself into the field of view. As a result, the first and the second augmented reality operation modes cause the same perception 205A, 205B for the user 101.

In Fig. 2A and 2B, different applications of the first and second augmented reality operation are already indicated by the different environmental conditions. Fig. 2A shows a preferred field of application of the video see-through mode in a dark environment and Fig. 2B shows a preferred field of application of the optical see-through mode in a bright environment. This is indicated by the schematic illustration of a moon in the environment 202R in Fig. 2A and a sun in the environment 202R in Fig. 2B. The camera-supported perception of the real environment 202R can be advantageous for example in dark environments due to electronic means for enhancing the contrast, for example. However, in a bright environment, especially when the sun is shining and/or there are reflections, the quality of the reproduction of the real environment by the camera 203 may be impaired. It may thus be advantageous to switch off the camera 203 such that the user 101 can see the environment with its own eyes directly.

However, further operation modes, such as a virtual reality operation mode, may be foreseen and implemented into the display device 102. This means, that the switching between one of the first and the second augmented reality operation modes and the virtual reality operation mode is also based on captured environment related data.

An example embodiment of the invention provides a controller (not shown) for use in wearable glasses 102. The controller may be configured to cause the wearable glasses 102 to switch between a first augmented reality operation mode and a second augmented reality operation mode. The controller can comprise a sensor that receives an input signal indicative of at least one parameter of an environment captured by a wearable glasses 102 sensor including a field of view of a user 101, 204. The controller may be equipped with some processing unit, e.g. processor or microprocessor or other computing logic (not shown). The processing unit compares each of the at least one parameters with a corresponding predefined threshold value. The threshold value may be chosen according to a user's 101, 204 experiences or measurements. Further, the controller (e.g. by means of the processing unit) causes the wearable glasses 102 to switch between the first and second augmented reality operation modes based on the result of the comparison.

The sensor which may be provided on a periphery of the controller may sense a brightness in the environment, It is possible to adjust the field of view in which the sensor senses the brightness in order to, for example, focus on a desired detail or sector which the user 101, 204 intends to enhance or supplement with virtual objects. The adjustment may be achieved by an input means of the wearable glasses 102. For example, a scrolling wheel (not shown) may be attached to at least one of the lateral temples 105 of the glasses 102, wherein a rotation of the wheel adjusts the size of the captured field of view. The at least one parameter may be a brightness value or level of illuminance of the captured environment. According to an embodiment of the invention, the brightness value parameter triggering a switching operation of the display device may be defined as a highest, a lowest, or an average measured brightness value and the threshold value is set in accordance with the respective brightness value parameter. For example, the field of view can be divided in at least two field of view parts and for each field of view part, a brightness value can be measured. Based on the different field of view part brightness values, an average brightness value can be calculated. The at least two field of view parts may comprise a different prioritization such that for example a center field of view part may have a higher prioritization than an outer field of view part. The at least two field of view parts may further be adapted with regard to the virtual objects. For example, it is possible to define a field of view part as the direct surrounding, i.e. the environment being in close proximity, of a virtual object. In terms of the switching process, the field of view parts directly surrounding the virtual object are to be prioritized. Prioritized field of view parts may have a higher weighting when calculating the average value.

The brightness value or level of illuminance may be measured as luminous flux per unit area, wherein it is used as a measure of the intensity, as perceived by the user's eye, of light that hits or passes through the display 104 of the wearable glasses 102. A given amount of light will illuminate a surface more dimly if it is spread over a larger area, so illuminance is inversely proportional to the illuminated area. As the illuminated area, being the display 104 of the wearable glasses 102, is constant for a given wearable glasses 102, the brightness value mainly depends on the luminous flux generated by the environment 202R.

The sensor (not shown) could be realized by camera 103, 203 and the at least one parameter may be indicative of one or more parameters selected from a predefined parameter group. Example parameters are a brightness value of the captured environment, a number of virtual objects displayed by the wearable glasses 102, a complexity of virtual objects displayed by the wearable glasses 102, a size of virtual objects displayed by the wearable glasses 102, a resolution of virtual objects displayed by the wearable glasses 102, or a distance between a first virtual object and a second virtual object. The characteristics of the added virtual objects can differ between each other and can have different impacts on the quality of the generated image perceived by the user 101, 204. The complexity of a virtual object can for example be dependent on a geometric form or a color gradient. It is clear, that a single virtual line is less complex than a virtual image of for example a car. The resolution of a virtual object may be defined as a level of detail of the object. In the prior art, several ways of measuring an image resolution are known. For example, pixel resolution is the capability of a sensor to observe or measure the smallest object clearly with distinct boundaries. When the at least one parameter refers to the distance between the first virtual object and the second virtual object, a highest, a lowest, or an average measured distance value may be used,

Additionally, a camera filter including an UV filter, a polarizer or a grey filter may be integrated into the camera. The UV filter blocks or absorbs ultraviolet light in order to reduce the level of ultraviolet light captured by the camera. A grey filter reduces or modifies the intensity of all wavelengths or colors of the captured light equally in order to reduce the amount of light entering the camera. A polarizer is an optical filter that lets light waves of a specific polarization pass and blocks light waves of other polarizations, for example light being higher than a predetermined maximum value, The use of such a camera filter can be advantageous for the switching operation process as the switching is more reliable. For example, not every single light spot in the captured environment of the camera causes the camera device to switch from one operation mode into the other.

The controller may cause the wearable glasses 102 to switch between the first and the second augmented reality operation modes, or between one of the first and second augmented reality operation modes and a third virtual reality operation mode. In an embodiment, the controller causes the wearable glasses 102 to switch from the second augmented reality operation mode to the first augmented reality operation mode. The switching process is caused or initiated if at least one of the following conditions is satisfied. The brightness value indicated in the input signal is higher than the threshold illuminance value, the number of virtual objects is higher than a predefined threshold level, the complexity is higher than a predefined threshold complexity value, the size of the virtual objects is smaller than a predefined threshold size value, the resolution of the virtual objects is higher than a predefined threshold resolution value, or the distance between the first virtual object and the second virtual object is higher than a predefined threshold distance value.

In a further embodiment, the controller causes the wearable glasses 102 to switch from the first augmented reality operation mode to the second augmented reality operation mode. The switching process is caused or initiated if at least one of the following conditions is satisfied. The brightness value indicated in the input signal is equal to or lower than the threshold illuminance value, the number of virtual objects is equal to or lower than the predefined threshold level, the complexity is equal to or lower than the predefined threshold complexity value, the size of the virtual objects is equal to or higher than the predefined threshold size value, the resolution of the virtual objects is equal to or lower than the predefined threshold resolution value, or the distance between the first virtual object and the second virtual object is equal to or lower than the predefined threshold distance value. The user 101, 204 can have the possibility to adapt the characteristics of the glasses 102. For example, the user can choose between at least the above mentioned conditions for causing automatic switching between the augmented reality operation modes.

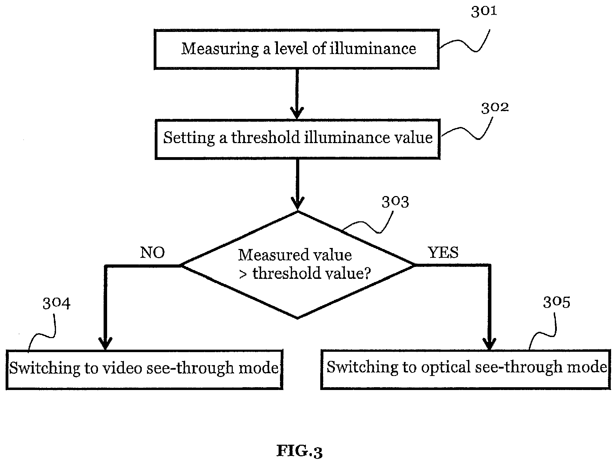

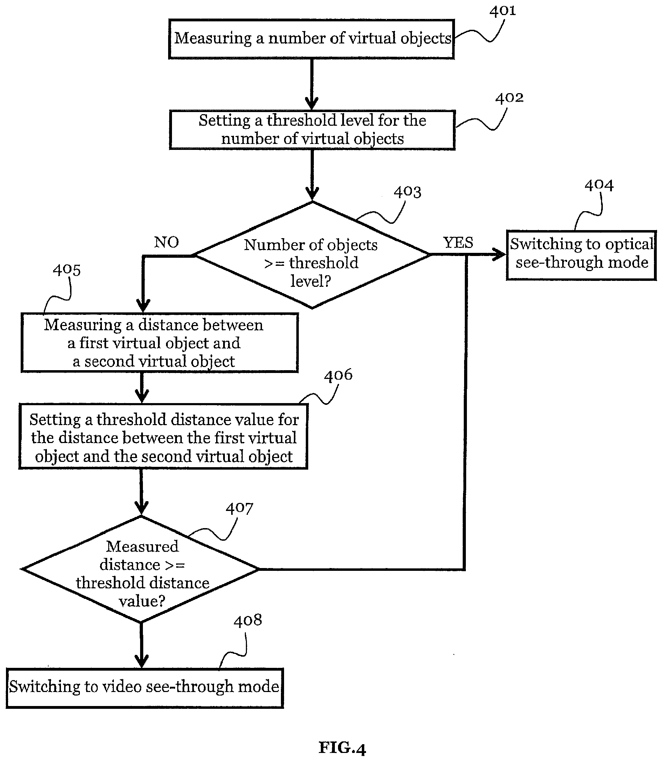

Exemplary methods of switching between the video see-through mode and the optical see-through mode, and vice versa, are shown in Fig. 3 and 4. Note that the method of Fig. 3 and Fig. 4 could be combined with one another into a single process, e.g. by sequentially considering the criteria discussed herein below for deciding which of the augmented reality operation modes of the glasses 102 is to be used.

According to the switching process illustrated in Fig. 3, a level of illuminance or a brightness value of the user's environment including at least a part of the field of view is measured (step 301). This brightness value may also be transformed into a brightness value parameter triggering a switching operation of the display device. The brightness value parameter may be defined as a highest, a lowest, or an average measured brightness value in the captured sensor range or field of view of the camera 103, or a subrange thereof. Then, a threshold illuminance value is set in accordance with the respective brightness value parameter (step 302) and maybe chosen according to the user's experiences or measurements. This threshold illuminance value may be chosen such that a reliable switching process may be achieved in order to ensure a constant high quality of the user's perception of the users field of view combined with computer-generated objects. For example, the threshold illuminance value can be in the range of 10 lx to 50 lx. In a more detailed example, the , threshold illuminance value is in the range of 20 lx to 30 lx, wherein lux (lx) is the SI derived unit of illuminance and luminous emittance. Automatic switching between the first and the second augmented reality operation modes is caused by a comparison between the measured brightness value parameter and the set threshold illuminance value (step 303). If the measured brightness value parameter is higher than the predefined threshold illuminance value, the glasses 102 switches to the optical see-through mode (step 305). If the measured brightness value parameter is equal to or less than the predefined threshold illuminance value, the glasses 102 switches to the video see-through mode (step 304). For instance, the switching processes can be used during full-room experience in indoor areas, such as a first-person-shooter game experience where a user needs to transform a dark room into a bright room, and vice versa.

Typically, when the glasses 102 are operated in video see-through mode, an increasing number of objects displayed on the display 104 makes it more difficult for the user to focus on every virtual object and the real environment at the same time. Therefore, it may be advantageous that the glasses 102 switches into the optical see-through mode, if a certain predefined threshold value for the number of virtual objects is exceeded. An example of such switching process is shown in Fig. 4. The number of virtual or computer-generated objects which are added into the perception of the real environment including the real field of view 202R of the user 101 is determined (step 401). The more virtual objects the user wants to add into the real field of view 202R, the higher the performance requirements get for the glasses 102 in terms of aligning the virtual objects with the real environment and integrating the virtual objects into the real environment such that each virtual object can be perceived as a distinct object. Especially when one object is positioned behind another object, i.e. the objects have different virtual distances with regard to the display 104, distinguishing between and focusing on those separate objects may be difficult. Therefore, a threshold level for the number of virtual objects is set (step 402). Any integer may be chosen for the threshold, depending on the field of application of the glasses 102. For example, the threshold number of objects may be in the range of 2 (inclusive) to 8 (inclusive) objects, In one example, the threshold number of objects is 3, 4, 5, or 6.

In response to a comparison between the determined number of objects and a predefined threshold level for the number of virtual objects, a switching operation is caused (step 403). The switching may be caused by above-described controller or according to a controller unit, as will be described below. If the measured number of virtual objects is equal to or higher than the predefined threshold number of virtual objects, the glasses 102 switches to the optical see-through mode (step 404). In order to ensure a realistic augmented reality perception, it is required to match the real field of view of the user 101 with the virtual objects.

If the determined number of virtual objects is lower than the predefined threshold number of virtual objects, a further condition may be evaluated. For example, a distance between at least two virtual objects may be measured (step 405). It is possible to generate an average distance value for each measured distance between two virtual objects. In another example, the lowest distance or highest distance between two virtual objects can be considered for making a switching decision. A threshold distance value for the measured distance value between the two virtual objects may be set (step 406). A further comparison may be performed. If, for example, the average distance between two virtual objects is equal to or higher than the predefined threshold distance value (step 407), the glasses 102 switches to the optical see-through mode (step 404). If the average distance between two virtual objects is less than the predefined threshold distance value (step 407), the glasses 102 switches to the video see-through mode (step 408). A distance may be defined as a horizontal or vertical direction, i.e. a direction perpendicular with regard to a viewing direction V of the user. The sensor may also be able to detect a distance between two virtual objects with regards to the viewing direction of the user 104. If two virtual objects are spaced to each other such that the distance between those objects comprises at least two dimension components, for example a horizontal and vertical dimension component, the sensor may be able to detect the single dimension components and compare them with a respective predefined threshold distance value for this dimension component. A switching process can be triggered if at least one measured value is higher than the respective threshold value.

One of the above example conditions triggering a switching between augmented reality modes may be replaced or complemented by at least one of the above-mentioned further conditions. However, in any case the switching is automatic so that no user input or no user-related data is needed in order to cause a switching between the video see-through mode and the optical see-through mode. The controller thus causes the glasses 102 to automatically switch between its operation modes, based on at least one environmental parameter.

For example, a switching may be triggered based on the size of the virtual objects or on the size of the real environment in the field of view of the user 101. If the size of an object in the real environment is very small, i.e. smaller than a predefined threshold size, the camera 203 may not be suitable for capturing those objects and displaying them on the display 104 of the glasses 102 while ensuring a high quality standard in terms of for example resolution or contrast of the displayed image for the user 101. Therefore, the glasses 102 may be switched into optical see-through mode. Similar considerations may apply with regard to a resolution or complexity of the virtual objects. For example, the pixel resolution may be defined as the capability of a sensor to observe or measure the smallest object clearly with distinct boundaries. Therefore, if the present pixel resolution is higher than the predefined threshold pixel resolution threshold value, the glasses can switch into optical see-through mode to ensure a high quality.

In a further example embodiment of the invention, wearable glasses 102 may be operable in a first augmented reality operation mode and a second augmented reality operation mode. The wearable glasses 102 can comprise a controller which is configured according to any of above described embodiments. A camera 103, 203 may capture the environment including at least a part of the field of view of the user 101, 204. Further, a display 104 may display 104 the captured environment if the wearable glasses 102 is operated in the second augmented reality operation mode. If the wearable glasses 102 is operated in the first augmented reality operation mode, the display 104 does not display 104 the captured environment, but can function as a conventional lens being at least partly transparent of a conventional glasses. The user 101, 204 can at least partly look through the display 104 to see or perceive the environment. However, in both augmented reality operation modes, as well as in the virtual reality operation mode, the display 104 may display 104 the generated virtual objects. Advantageously, no user related data or even a user 101, 204 input is needed.

According to a further example embodiment of the invention, a wearable glasses 102 may be operable in a first augmented reality operation mode and a second augmented reality operation mode. A camera 103, 203 may capture an environment including at least a part of a field of view of a user 101, 204. The wearable glasses 102 can further comprise a display 104 which may display 104 the captured environment if the wearable glasses 102 is operated in the second augmented reality operation mode and to not display 104 the captured environment if the wearable glasses 102 is operated in the first augmented reality operation mode. A controller unit may receive at least one parameter of the captured environment and to switch between the first and second augmented reality operation modes based on the at least one environmental parameter. Advantageously, no user related data or even a user 101, 204 input is needed to cause the wearable glasses 102 to switch between the operation modes.

As already described above, the first augmented reality operation mode may be an optical see-through mode and the second augmented reality operation mode may be a video see-through mode. Therefore, the controller switches between the first augmented reality operation mode and the second augmented reality operation mode. This means that the environment of the user 101, 204 including the field of view of the user 101, 204 is either seen directly by the user 101, 204s eyes (optical see-through mode) or via the display 104 displaying the captured environment of the camera 103, 203 (video see-through mode). In both operation modes, the real field of view of the user 101, 204 is overlaid with virtual images.

The camera 103, 203 may be configured to detect a brightness in the environment or the controller unit can comprise a sensor which senses a brightness in the environment. The at least one parameter may be a brightness value of the captured environment. According to an embodiment of the invention, the brightness value parameter may be a highest, a lowest, or an average measured brightness value.

In an example embodiment, the at least one parameter may be indicative of one or more parameters selected from a predefined parameter group. Example parameters are a brightness value of the captured environment, a number of virtual objects displayed by the wearable glasses 102, a complexity of virtual objects displayed by the wearable glasses 102, a size of virtual objects displayed by the wearable glasses 102, a resolution of virtual objects displayed by the wearable glasses 102, or a distance between a first virtual object and a second virtual object. The characteristics of the added virtual objects can differ between each other and can have different impacts on the quality of the generated image perceived by the user 101, 204. The complexity of a virtual object can for example be dependent on a geometric form or a color gradient. It is clear, that a single virtual line is less complex than a virtual image of for example a car. The resolution of a virtual object may be defined as a level of detail of the object. In the prior art, several ways of measuring an image resolution are known. For example, pixel resolution is the capability of a sensor to observe or measure the smallest object clearly with distinct boundaries. When the at least one parameter refers to the distance between the first virtual object and the second virtual object, a highest, a lowest, or an average measured distance value may be used.

The controller unit (not shown) may compare the at least one environmental parameter with a corresponding predefined threshold value and to adjust the operation mode based on the result of the comparison. Conclusively, the control unit causes the glasses 102 to switch between its operation modes.

In an embodiment of the wearable glasses 102 according to the invention, the controller unit can cause the wearable glasses 102 to switch between the first and the second augmented reality operation modes, or between one of the first and second augmented reality operation modes and a third virtual reality operation mode. In a first alternative, the controller causes the wearable glasses 102 to switch from the second augmented reality operation mode to the first augmented reality operation mode. The switching process is caused or initiated if at least one of the following conditions is satisfied. The brightness value indicated in the input signal is higher than the threshold illuminance value, the number of virtual objects is higher than a predefined threshold level, the complexity is higher than a predefined threshold complexity value, the size of the virtual objects is smaller than a predefined threshold size value, the resolution of the virtual objects is higher than a predefined threshold resolution value, or the distance between a first virtual object and a second virtual object is higher than a predefined threshold distance value.

In a second alternative which may be combined with the first alternative, the controller unit causes the wearable glasses 102 to switch from the first augmented reality operation mode to the second augmented reality operation mode. The switching process is caused or initiated if at least one of the following conditions is satisfied. The brightness value indicated in the input signal is equal to or lower than the threshold illuminance value, the number of virtual objects is equal to or lower than the predefined threshold level, the complexity is equal to or lower than the predefined threshold complexity value, the size of the virtual objects is equal to or higher than the predefined threshold size value, the resolution of the virtual objects is equal to or lower than the predefined threshold resolution value, or the distance between at the first virtual object and the second virtual object is equal to or lower than the predefined threshold distance value. The switching process may be performed in accordance with above described explanations with regard to Fig. 3 and 4.

In a further development of the invention, a third operation mode may be provided which is also an augmented reality operation mode or even a virtual reality operation mode. Conclusively, the wearable glasses 102 may be operable also in the third operation mode. It may be clear, that similar possibilities exist to cause the wearable glasses 102 to switch between one of the first and the second augmented reality operation modes and the third operation mode. The third operation mode may be a virtual reality operation mode.

On the one hand, especially when the glasses 102 is operated in the optical see-through mode, the display 104 must ensure that the user 101 can see through the display in order to perceive the real environment 202R with its own eyes, that means without the support of the camera 203. On the other hand, the display 104 must be able to display the computer-generated objects and/or to reflect images of those objects into the user's eyes. In an embodiment, the display 104 is at least partially transparent. For example, the display 104 may be a transparent or semi-transparent display 104 panel, such as an organic light emitting diode (OLED) or a liquid crystal display 104 (LCD).

A further example embodiment of the display 104 is a transparent or semi-transparent lens. The lens may be dimensioned and shaped similar to the lens of a conventional glasses. However, the lens must be able to display 104 the virtual objects. In a further development, the lens may be made from one piece, or comprises two lens parts. Each lens part may be arranged in front of a user's eye.

It is also possible, that the controller unit comprises a programmable data processing circuitry with a memory module (not shown) on which a program (not shown) is stored. This operation program is designed to cause the wearable glasses 102 to switch between its operation modes. Advantageously, the switching operation is performed exclusively automatically. This means that no interaction of the user 101, 204 or a user 101, 204 input is needed in order to initiate or cause a switching between the wearable glasses operation modes.

Alternatively, the wearable glasses 102 may be configured as a handheld device and/or an electronic 102. The handheld or electronic device can for example be a smart phone or a tablet.

### REFERENCE SIGN LIST

- 101, 204: user
- 102: display device
- 103, 203: camera
- 104A, B: display
- 105: temple
- 201A, B: displayed field of view
- 202R: real field of view
- 202V: transferred field of view
- 205A, B: perceived field of view
- V: viewing direction

## Claims

1. A controller for use in a display device (102), the controller being configured to cause the display device (102) to switch between a first augmented reality operation mode and a second augmented reality operation mode, the controller **characterized by:**
a sensor adapted to receive an input signal indicative of at least one parameter of an environment captured by a display device sensor, where the captured environment includes at least a part of a field of view of a user (101, 204); and
a processor unit adapted to compare each of the at least one parameters with a corresponding predefined threshold value; wherein the processor unit is further adapted to cause the display device (102) to switch between the first and second augmented reality operation modes based on the result of the comparison.

2. The controller according to claim 1, wherein the sensor is configured to sense a brightness in the environment, and the at least one parameter is a brightness value of the captured environment.

3. The controller according to claim 1, wherein the sensor is a camera (103, 203) and the at least one parameter is indicative of one or more parameters selected from a group comprising:
a brightness value of the captured environment;
a number of virtual objects displayed by the display device (102);
a complexity of virtual objects displayed by the display device (102);
a size of virtual objects displayed by the display device (102);
a resolution of virtual objects displayed by the display device (102); or
a distance between a first virtual object and a second virtual object.

4. The controller according to claim 2 or 3, wherein the controller causes the display device (102) to switch from the second augmented reality operation mode to the first augmented reality operation mode, if at least one of the following conditions is satisfied:
the brightness value indicated in the input signal is higher than a threshold brightness value;
the number of virtual objects is higher than a predefined threshold level;
the complexity is higher than a predefined threshold complexity value;
the size of the virtual objects is smaller than a predefined threshold size value;
the resolution of the virtual objects is higher than a predefined threshold resolution value;
the distance between the first virtual object and the second virtual object is higher than a predefined threshold distance value.

5. The controller according to one of claims 2 to 4, wherein the controller causes the display device (102) to switch from the first augmented reality operation mode to the second augmented reality operation mode, if at least one of the following conditions is satisfied:
the brightness value indicated in the input signal is equal to or lower than a threshold brightness value;
the number of virtual objects is equal to or lower than the predefined threshold level;
the complexity is equal to or lower than the predefined threshold complexity value;
the size of the virtual objects is equal to or higher than the predefined threshold size value;
the resolution of the virtual objects is equal to or lower than the predefined threshold resolution value;
the distance between the first virtual object and the second virtual object is equal to or lower than the predefined threshold distance value.

6. The controller according to one of the preceding claims, wherein the first augmented reality operation mode is an optical see-through mode and the second augmented reality operation mode is a video see-through mode.

7. A display device (102) operable in a first augmented reality operation mode and a second augmented reality operation mode, the display device (102) comprising:
a controller according to any of the claims 1 to 6;
a camera (103, 203) adapted to capture the environment including at least a part of the field of view of the user (101, 204); and
a display adapted to display the captured environment if the display device (102) is operated in the second augmented reality operation mode; wherein the display does not display the captured environment if the display device (102) is operated in the first augmented reality operation mode.

8. The display device (102) according to claim 7, wherein the display device (102) is a handheld device, a head mounted device or an electronic display device (102).

## Patentansprüche

1. Steuereinrichtung zur Verwendung in einer Anzeigevorrichtung (102), wobei die Steuereinrichtung konfiguriert ist, um die Anzeigevorrichtung (102) zu veranlassen, zwischen einem ersten Betriebsmodus erweiterter Realität und einem zweiten Betriebsmodus erweiterter Realität umzuschalten, wobei die Steuereinrichtung **gekennzeichnet ist durch**:
einen Sensor, der angepasst ist, um ein Eingangssignal zu empfangen, das mindestens einen Parameter einer Umgebung angibt, die **durch** einen Anzeigevorrichtungssensor erfasst wird, wobei die erfasste Umgebung mindestens einen Teil eines Sichtfelds eines Benutzers (101, 204) enthält; und
eine Prozessoreinheit, die angepasst ist, um jeden des mindestens einen Parameters mit einem entsprechenden vordefinierten Schwellenwert zu vergleichen; wobei die Prozessoreinheit ferner angepasst ist, um die Anzeigevorrichtung (102) zu veranlassen, zwischen dem ersten und dem zweiten Betriebsmodus erweiterter Realität basierend auf dem Ergebnis des Vergleichs umzuschalten.

2. Steuereinrichtung nach Anspruch 1, wobei der Sensor konfiguriert ist, um eine Helligkeit in der Umgebung zu erfassen, und der mindestens eine Parameter ein Helligkeitswert der erfassten Umgebung ist.

3. Steuereinrichtung nach Anspruch 1, wobei der Sensor eine Kamera (103, 203) ist und der mindestens eine Parameter einen oder mehrere Parameter angibt, die aus einer Gruppe ausgewählt sind, die umfasst:
einen Helligkeitswert der erfassten Umgebung;
eine Anzahl von virtuellen Objekten, die durch die Anzeigevorrichtung (102) angezeigt werden;
eine Komplexität von virtuellen Objekten, die durch die Anzeigevorrichtung (102) angezeigt werden;
eine Größe von virtuellen Objekten, die durch die Anzeigevorrichtung (102) angezeigt werden;
eine Auflösung von virtuellen Objekten, die durch die Anzeigevorrichtung (102) angezeigt werden; oder
einen Abstand zwischen einem ersten virtuellen Objekt und einem zweiten virtuellen Objekt.

4. Steuereinrichtung nach Anspruch 2 oder 3, wobei die Steuereinrichtung die Anzeigevorrichtung (102) veranlasst, vom zweiten Betriebsmodus erweiterter Realität zum ersten Betriebsmodus erweiterter Realität umzuschalten, wenn mindestens eine der folgenden Bedingungen erfüllt ist:
der im Eingangssignal angegebene Helligkeitswert ist höher als ein Schwellenhelligkeitswert;
die Anzahl von virtuellen Objekten ist höher als ein vordefinierter Schwellenwert;
die Komplexität ist höher als ein vordefinierter Schwellenkomplexitätswert;
die Größe der virtuellen Objekte ist kleiner als ein vordefinierter Schwellengrößenwert;
die Auflösung der virtuellen Objekte ist höher als ein vordefinierter Schwellenauflösungswert;
der Abstand zwischen dem ersten virtuellen Objekt und dem zweiten virtuellen Objekt ist höher als ein vordefinierter Schwellenabstandswert.

5. Steuereinrichtung nach einem der Ansprüche 2 bis 4, wobei die Steuereinrichtung die Anzeigevorrichtung (102) veranlasst, vom ersten Betriebsmodus erweiterter Realität zum zweiten Betriebsmodus erweiterter Realität umzuschalten, wenn mindestens eine der folgenden Bedingungen erfüllt ist:
der im Eingangssignal angegebene Helligkeitswert ist gleich oder niedriger als ein Schwellenhelligkeitswert;
die Anzahl von virtuellen Objekten ist gleich oder niedriger als der vordefinierte Schwellenwert;
die Komplexität ist gleich oder niedriger als der vordefinierte Schwellenkomplexitätswert;
die Größe der virtuellen Objekte ist gleich oder höher als der vordefinierte Schwellengrößenwert;
die Auflösung der virtuellen Objekte ist gleich oder niedriger als der vordefinierte Schwellenauflösungswert;
der Abstand zwischen dem ersten virtuellen Objekt und dem zweiten virtuellen Objekt ist gleich oder niedriger als der vordefinierte Schwellenabstandswert.

6. Steuereinrichtung nach einem der vorhergehenden Ansprüche, wobei der erste Betriebsmodus erweiterter Realität ein optischer Durchsichtmodus ist und der zweite Betriebsmodus erweiterter Realität ein Video-Durchsichtmodus ist.

7. Anzeigevorrichtung (102), die in einem ersten Betriebsmodus erweiterter Realität und einem zweiten Betriebsmodus erweiterter Realität betreibbar ist, wobei die Anzeigevorrichtung (102) umfasst:
eine Steuereinrichtung nach einem der Ansprüche 1 bis 6;
eine Kamera (103, 203), die angepasst ist, um die Umgebung zu erfassen, die mindestens einen Teil des Sichtfelds des Benutzers (101, 204) enthält; und
eine Anzeige, die angepasst ist, um die erfasste Umgebung anzuzeigen, wenn die Anzeigevorrichtung (102) im zweiten Betriebsmodus erweiterter Realität betrieben wird; wobei die Anzeige die erfasste Umgebung nicht anzeigt, wenn die Anzeigevorrichtung (102) im ersten Betriebsmodus erweiterter Realität betrieben wird.

8. Anzeigevorrichtung (102) nach Anspruch 7, wobei die Anzeigevorrichtung (102) eine tragbare Vorrichtung, eine am Kopf angebrachte Vorrichtung oder eine elektronische Anzeigevorrichtung (102) ist.

## Revendications

1. Dispositif de commande destiné à être utilisé dans un dispositif d'affichage (102), le dispositif de commande étant configuré de manière à amener le dispositif d'affichage (102) à commuter entre un premier mode de fonctionnement en réalité augmentée et un second mode de fonctionnement en réalité augmentée, le dispositif de commande étant **caractérisé par** :
un capteur apte à recevoir un signal d'entrée indicatif d'au moins un paramètre d'un environnement capturé par un capteur de dispositif d'affichage, où l'environnement capturé inclut au moins une partie d'un champ de vision d'un utilisateur (101, 204) ; et
une unité de traitement apte à comparer chaque paramètre dudit au moins un paramètre à une valeur seuil prédéfinie correspondante ; dans laquelle l'unité de traitement est en outre apte à amener le dispositif d'affichage (102) à commuter entre les premier et second modes de fonctionnement en réalité augmentée sur la base du résultat de la comparaison.

2. Dispositif de commande selon la revendication 1, dans lequel le capteur est configuré de manière à détecter une luminosité dans l'environnement, et dans lequel ledit au moins un paramètre est une valeur de luminosité de l'environnement capturé.

3. Dispositif de commande selon la revendication 1, dans lequel le capteur est une caméra (103, 203) et ledit au moins un paramètre est indicatif d'un ou plusieurs paramètres sélectionnés à partir d'un groupe comprenant :
une valeur de luminosité de l'environnement capturé ;
un nombre d'objets virtuels affichés par le dispositif d'affichage (102) ;
une complexité des objets virtuels affichés par le dispositif d'affichage (102) ;
une taille des objets virtuels affichés par le dispositif d'affichage (102) ;
une résolution des objets virtuels affichés par le dispositif d'affichage (102) ; ou
une distance entre un premier objet virtuel et un second objet virtuel.

4. Dispositif de commande selon la revendication 2 ou 3, dans lequel le dispositif de commande amène le dispositif d'affichage (102) à commuter du second mode de fonctionnement en réalité augmentée au premier mode de fonctionnement en réalité augmentée, si au moins l'une des conditions suivantes est satisfaite, dans lesquelles :
la valeur de luminosité indiquée dans le signal d'entrée est supérieure à une valeur de luminosité seuil ;
le nombre d'objets virtuels est supérieur à un niveau seuil prédéfini ;
la complexité est supérieure à une valeur de complexité seuil prédéfinie ;
la taille des objets virtuels est inférieure à une valeur de taille seuil prédéfinie ;
la résolution des objets virtuels est supérieure à une valeur de résolution seuil prédéfinie ;
la distance entre le premier objet virtuel et le second objet virtuel est supérieure à une valeur de distance seuil prédéfinie.

5. Dispositif de commande selon l'une quelconque des revendications 2 à 4, dans lequel le dispositif de commande amène le dispositif d'affichage (102) à commuter du premier mode de fonctionnement en réalité augmentée au second mode de fonctionnement en réalité augmentée, si au moins l'une des conditions suivantes est satisfaite :
la valeur de luminosité indiquée dans le signal d'entrée est égale ou inférieure à une valeur de luminosité seuil ;
le nombre d'objets virtuels est égal ou inférieur au niveau seuil prédéfini ;
la complexité est égale ou inférieure à la valeur de complexité seuil prédéfinie ;
la taille des objets virtuels est égale ou supérieure à la valeur de taille seuil prédéfinie ;
la résolution des objets virtuels est égale ou inférieure à la valeur de résolution seuil prédéfinie ;
la distance entre le premier objet virtuel et le second objet virtuel est égale ou inférieure à la valeur de distance seuil prédéfinie.

6. Dispositif de commande selon l'une quelconque des revendications précédentes, dans lequel le premier mode de fonctionnement en réalité augmentée est un mode de transparence optique et le second mode de fonctionnement en réalité augmentée est un mode de transparence vidéo.

7. Dispositif d'affichage (102) exploitable dans un premier mode de fonctionnement en réalité augmentée et dans un second mode de fonctionnement en réalité augmentée, le dispositif d'affichage (102) comprenant :
un dispositif de commande selon l'une quelconque des revendications 1 à 6 ;
une caméra (103, 203) apte à capturer l'environnement incluant au moins une partie du champ de vision de l'utilisateur (101, 204) ; et
un afficheur apte à afficher l'environnement capturé si le dispositif d'affichage (102) est exploité dans le second mode de fonctionnement en réalité augmentée ; dans lequel l'afficheur n'affiche pas l'environnement capturé si le dispositif d'affichage (102) est exploité dans le premier mode de fonctionnement en réalité augmentée.

8. Dispositif d'affichage (102) selon la revendication 7, dans lequel le dispositif d'affichage (102) est un dispositif portatif, un casque à réalité virtuelle ou un dispositif d'affichage électronique (102).
